# EUROPEAN PATENT APPLICATION

(11) **EP 4 542 178 A1**
(43) Date of publication of application: **23.04.2025**
(21) Application number: 23823604.6
(22) Date of filing: 19.05.2023
(51) Int. Cl.: G01D 5/244, G01D 5/245, G01D 5/347

(54) **ROTARY ENCODER**

(30) Priority: 16.06.2022 JP 2022096938
(71) Applicant: Tamagawa Seiki Co., Ltd., Iida-shi Nagano 395-8515 (JP)
(72) Inventor: ISOMURA, Tsubasa, Iida-shi, Nagano 395-8515 (JP)
(74) Representative: Patentanwälte Geyer, Fehners & Partner mbB
(86) International application number: PCT/JP2023/018698
(87) International publication number: WO 2023/243303

(57) **Abstract**

A rotary encoder which detects a rotation of a rotating disk 100 provided with an annular code pattern 110 by using a detecting unit 120 and which calculates an angle of rotation of the rotating disk 100 by using an encoder processing unit 130, wherein the code pattern 110 is constituted of a concentric first code pattern 111 and a concentric second code pattern 112, the first code pattern 111 is constituted of a plurality of first patterns having a first inclination with respect to a radial direction, the second code pattern 112 is constituted of a plurality of second patterns having a second inclination in a direction that differs from the first inclination with respect to the radial direction, and the encoder processing unit 130 calculates an eccentricity of the code pattern 110, based on a detection result of the first code pattern 111 by the detecting unit 120 and a detection result of the second code pattern 112 by the detecting unit 120 and corrects the angle of rotation according to the calculated eccentricity.

## Description

### Technical Field

This invention relates to a rotary encoder.

### Background Art

There is an optical rotary encoder including a rotating disk which is provided with slits, a detecting unit which includes a light-receiving/emitting unit, and an encoder processing unit which calculates an angle of rotation of the rotating disk from a detection result of the detecting unit. In the case of this rotary encoder, an error (hereinafter, referred to as an "eccentric angle error") of one period is known to be generated by one rotation in an eccentric state where a center of rotation of the rotating disk and a center of a pattern of the slits are not precisely aligned with each other.

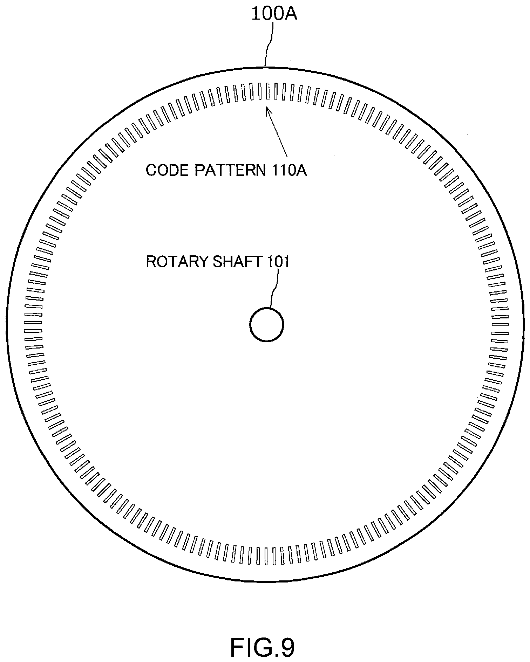

In a conventional rotary encoder, a code pattern provided on a rotating disk is as shown in Fig. 9. In Fig. 9, a code pattern 110A in which each slit is formed in a radial direction is formed on a rotating disk 100A. In the case of this code pattern 110A, an eccentricity cannot be detected.

In consideration thereof, in order to eliminate the eccentric angle error described above, PTL 1 proposes a method of arranging a detecting unit at each of two positions that oppose each other across a center of rotation of a rotating disk to generate two pieces of angle data of angles that are 180 degrees out of phase with each other and averaging the two pieces of angle data.

### Citation List

### Patent Literature

[PTL 1] Japanese Patent Application Publication No. S60-146113

### Summary of Invention

### Technical Problem

With the method according to PTL 1 described above, the two detecting units have to be accurately arranged at positions that oppose each other across the center of rotation of the rotating disk to generate two pieces of angle data of angles that are 180 degrees out of phase with each other. Providing detecting units at two locations in this manner causes problems such as increasing the size of the rotary encoder, increasing cost due to an increase in the number of components, and a decline in workability of installation due to adjusting the two detecting units.

Therefore, a rotary encoder is desired which, when optically detecting a code pattern of a rotating disk to calculate an angle of rotation, does not cause an increase in apparatus size and an increase in cost, and which does not require laborious adjusting work, and moreover which enables an eccentric angle error of one period generated by one rotation contained in angle data to be accurately eliminated.

An object of the present invention is to provide a rotary encoder capable of eliminating an eccentric angle error when optically detecting a code pattern of a rotating disk to calculate an angle of rotation without increasing apparatus size.

### Solution to Problem

The rotary encoder according to this invention is a rotary encoder which detects a rotation of a rotating disk provided with an annular code pattern by using a detecting unit and which calculates an angle of rotation of the rotating disk by using an encoder processing unit, wherein the code pattern is constituted of a concentric first code pattern and a concentric second code pattern, the first code pattern is constituted of a plurality of first patterns having a first inclination with respect to a radial direction, the second code pattern is constituted of a plurality of second patterns having a second inclination in a direction that differs from the first inclination with respect to the radial direction, and the encoder processing unit calculates an eccentricity of the code pattern, based on a detection result of the first code pattern by the detecting unit and a detection result of the second code pattern by the detecting unit and corrects the angle of rotation according to the calculated eccentricity.

In the rotary encoder according to this invention, the first inclination and the second inclination are either +45 degrees and -45 degrees or -45 degrees and +45 degrees.

In the rotary encoder according to this invention, the plurality of first patterns that constitute the first code pattern and the plurality of second patterns that constitute the second code pattern are constituted of slits, and the detecting unit includes: a light source which irradiates the first code pattern and the second code pattern with light; a fixed slit which condenses, by an opening having a certain size, each of light from the light source transmitted through the first code pattern and light from the light source transmitted through the second code pattern; and a light-receiving unit which detects light from the light source transmitted through the first code pattern and the fixed slit and which detects light from the light source transmitted through the second code pattern and the fixed slit.

In the rotary encoder according to this invention, the encoder processing unit includes: an angle data converting unit which generates angle data, based on a detection result of the first code pattern by the detecting unit and a detection result of the second code pattern by the detecting unit; an eccentricity calculating unit which calculates eccentricity data indicating an eccentricity of the code pattern, based on a change in phases between the detection result of the first code pattern by the detecting unit and the detection result of the second code pattern by the detecting unit; and a correcting unit which corrects the angle data, based on the eccentricity data.

### Advantageous Effects of Invention

According to this invention, a rotary encoder capable of eliminating an eccentric angle error when optically detecting a code pattern of a rotating disk to calculate an angle of rotation without increasing apparatus size can be provided by calculating an eccentricity of the code pattern of the rotating disk, based on detection results by a detecting unit of a first code pattern and a second code pattern when optically detecting the code pattern and calculating an angle of rotation and by correcting the angle of rotation according to the calculated eccentricity.

### Brief Description of Drawings

Fig. 1 is a configuration diagram showing a code pattern provided on a rotating disk according to a first embodiment.
Fig. 2 is a configuration diagram showing a configuration of a rotary encoder according to the first embodiment.
Fig. 3 is an explanatory diagram showing a change in a positional relationship due to an eccentricity between the code pattern of the rotating disk and a fixed slit of a detecting unit in the first embodiment.
Fig. 4 is an explanatory diagram showing a change in a positional relationship due to an eccentricity between the rotating disk and the code pattern in the first embodiment.
Fig. 5 is an explanatory diagram showing phase characteristics of the code pattern when an eccentricity exists in the first embodiment.
Fig. 6 is an explanatory diagram showing a first arrangement example of the code pattern of the rotating disk and the fixed slit of the detecting unit in the first embodiment.
Fig. 7 is an explanatory diagram showing a second arrangement example of the code pattern of the rotating disk and the fixed slit of the detecting unit in the first embodiment.
Fig. 8 is an explanatory diagram showing another code pattern in the first embodiment.
Fig. 9 is a configuration diagram showing a code pattern provided on a rotating disk in a conventional rotary encoder.

### Description of Embodiments

Hereinafter, embodiments of a rotary encoder according to the present invention will be described using the drawings. Note that a same portion in the respective drawings is denoted by a same reference sign.

### First embodiment

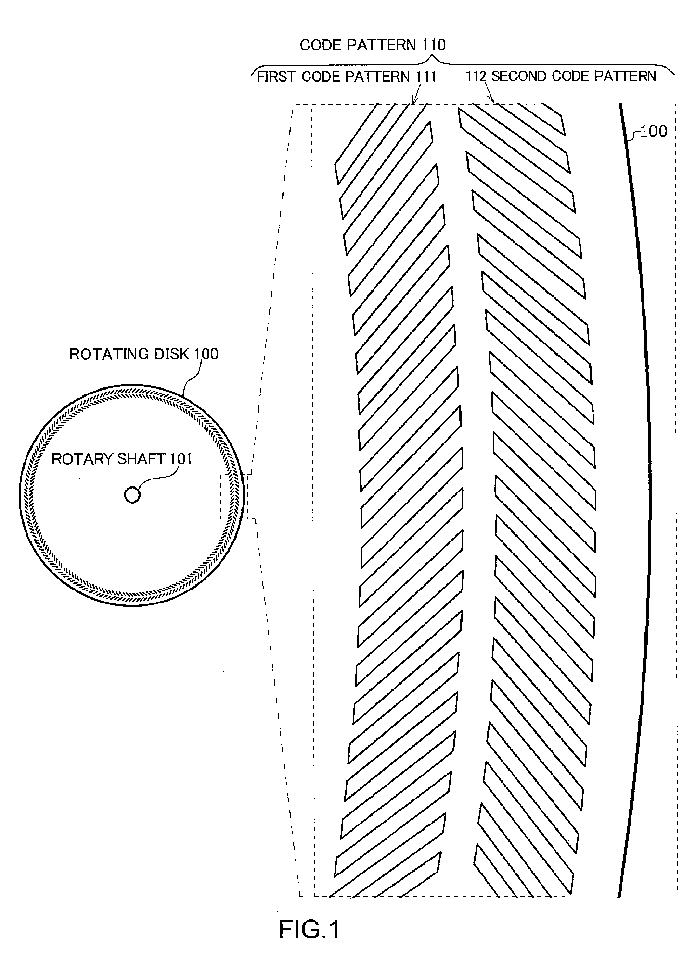

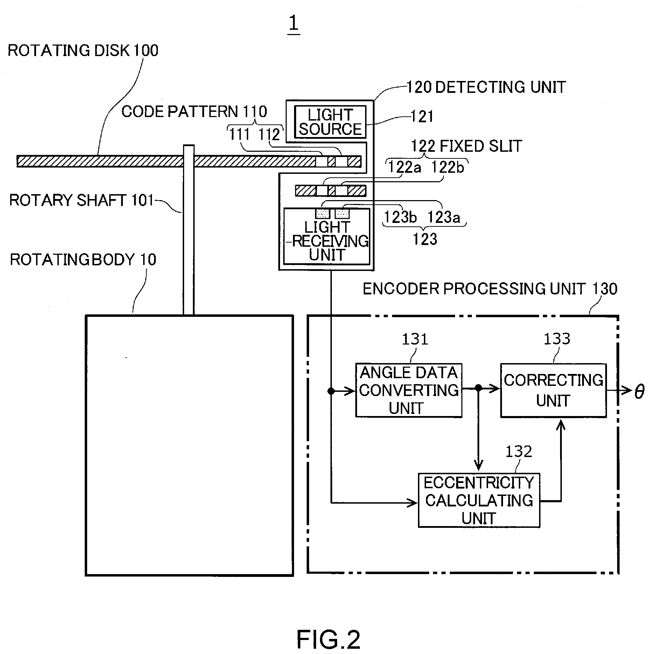

First, a basic configuration of a rotary encoder 1 according to a first embodiment of the present invention will be described with reference to Figs. 1 and 2.

Fig. 1 is a configuration diagram showing a code pattern 110 provided on a rotating disk 100 according to the first embodiment. Fig. 2 is a configuration diagram showing a configuration of the rotary encoder 1 according to the first embodiment.

### [Configuration of rotary encoder 1]

First, the configuration of the rotary encoder 1 will be described with reference to Fig. 2.

The rotary encoder 1 is for calculating an angle of rotation of a rotating body 10 and mainly includes the rotating disk 100, a rotary shaft 101, a detecting unit 120, and an encoder processing unit 130. When calculating the angle of rotation of the rotating body 10, the rotary encoder 1 performs correction so as to eliminate an eccentric angle error contained in angle data.

The rotating disk 100 is connected to the rotating body 10 by the rotary shaft 101. Therefore, the rotating disk 100 rotates at a same speed of rotation as the rotating body 10. As shown in Fig. 1, a code pattern 110 constituted of slits is formed on the rotating disk 100. The code pattern 110 is constituted of a concentric first code pattern 111 and a concentric second code pattern 112.

The first code pattern 111 is constituted of a plurality of first patterns with a first inclination relative to a radial direction. For example, as shown in Fig. 1, the first code pattern 111 is constituted of slits of a plurality of first patterns with an inclination of +45 degrees relative to the radial direction.

The second code pattern 112 is constituted of a plurality of second patterns with a second inclination in a different direction from the first inclination relative to the radial direction. For example, as shown in Fig. 1, the second code pattern 112 is constituted of slits of a plurality of second patterns with an inclination of -45 degrees relative to the radial direction.

Alternatively, the first patterns may be inclined in an opposite direction at -45 degrees and the second patterns may be inclined in an opposite direction at +45 degrees. While +45 degrees and -45 degrees are effective values that produce a highest sensitivity for detecting an eccentricity, the angles are non-limiting. For example, a combination of an inclination within a range of +30 degrees to +60 degrees and an inclination within a range of -30 degrees to -60 degrees may be adopted.

The detecting unit 120 is provided with a light source 121 and a pair made up of a fixed slit 122 and a light-receiving unit 123 so as to sandwich the rotating disk 100 therebetween.

The detecting unit 120 is a transmissive sensor which irradiates the code pattern 110 of the rotating disk 100 with light from the light source 121 and which receives transmitted light having been transmitted through the code pattern 110 and the fixed slit 122 with the light-receiving unit 123, and the detecting unit 120 optically detects a rotation of the rotating disk 100. When a reflective pattern is formed on the rotating disk 100 instead of the code pattern 110 that is transmissive, a reflective sensor can be used as the detecting unit 120.

The light-receiving unit 123 is constituted of a plurality of units including a first light-receiving unit 123a corresponding to the first code pattern 111 and a second light-receiving unit 123b corresponding to the second code pattern 112, with one unit being a set of light-receiving elements made up of a set of four light-receiving elements.

In a similar manner, the fixed slit 122 is constituted of a first fixed slit 122a and a second fixed slit 122b in accordance with the first code pattern 111 and the first light-receiving unit 123a and with the second code pattern 112 and the second light-receiving unit 123b. In this case, the first fixed slit 122a is constituted of a slit with a same inclination as the first patterns constituting the first code pattern 111 or, for example, a +45-degree slit. The second fixed slit 122b is constituted of a slit with a same inclination as the second patterns constituting the second code pattern 112 or, for example, a -45-degree slit.

The four light-receiving elements that constitute the set of light-receiving elements in each of the first light-receiving unit 123a and the second light-receiving unit 123b are assigned a+, a-, b+, and b-. By adding or subtracting signals from each of the light-receiving elements of a+, a-, b+, and b-, light reception signals for angle data calculation of two mutually-different phases can be obtained.

The encoder processing unit 130 is provided with an angle data converting unit 131, an eccentricity calculating unit 132, and a correcting unit 133. The angle data converting unit 131 subjects each of the light reception signals of the two phases from the light-receiving unit 123 to calculation processing and calculates first angle data P1 based on the first code pattern 111 and the second angle data P2 based on the second code pattern 112.

The eccentricity calculating unit 132 calculates an eccentric angle error based on a phase difference between the first angle data P1 and the second angle data P2 and on phase characteristics to be described later. The correcting unit 133 calculates an angle of rotation θ of the rotating disk 100 from which the eccentric angle error has been eliminated based on the eccentric angle error, the first angle data P1, and the second angle data P2 and outputs the angle of rotation θ. The correcting unit 133 may include a communication function for outputting the angle of rotation θ to an external device.

### [Specific example of eccentricity]

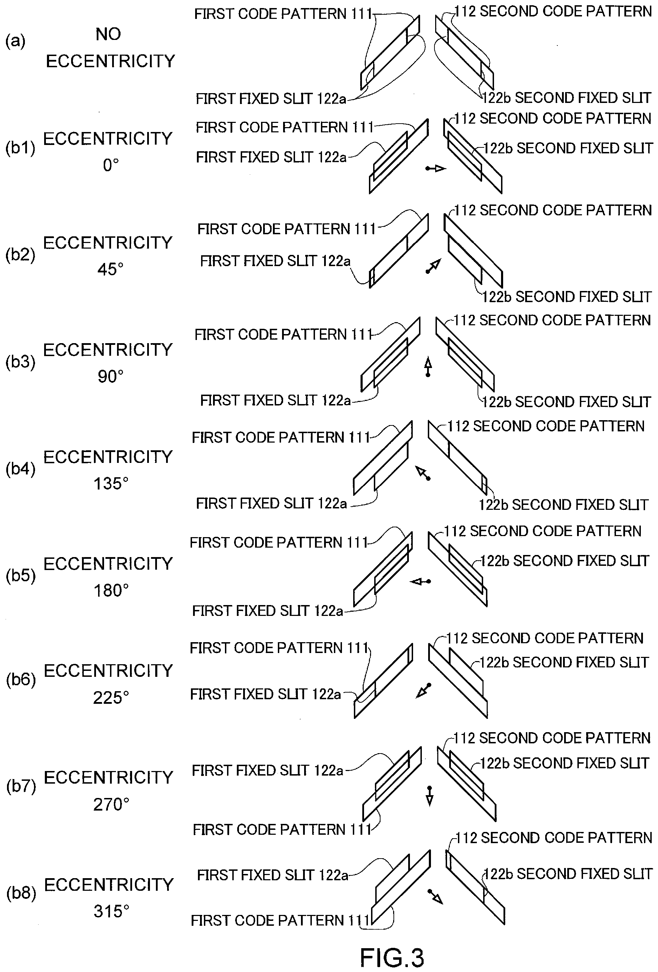

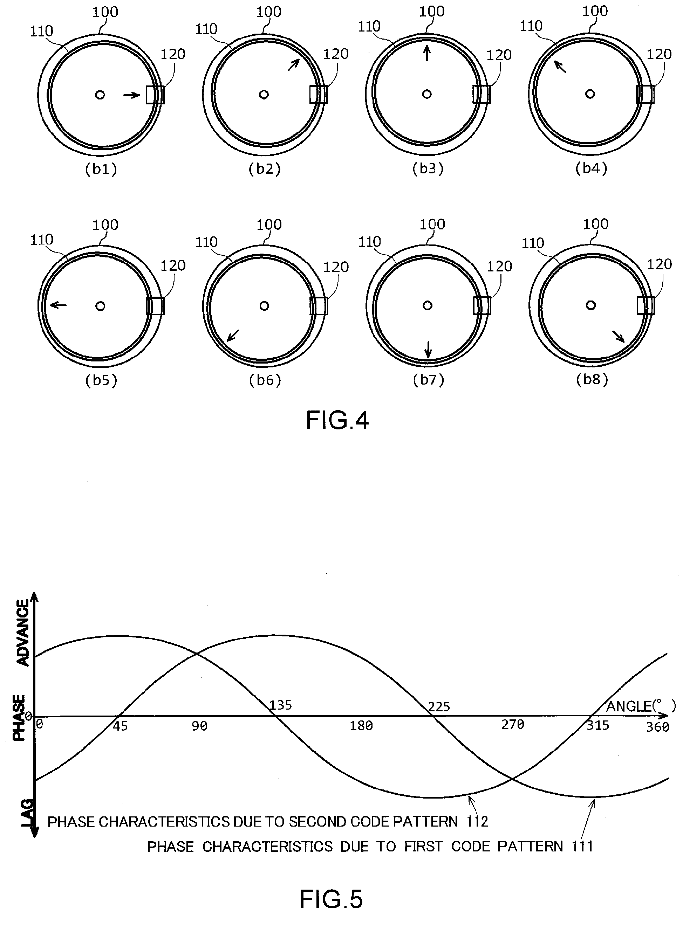

Hereinafter, a positional relationship corresponding to an eccentricity between the code pattern 110 and the fixed slit 122 will be described with reference to Figs. 3 and 4.

Fig. 3 is an explanatory diagram showing a change in a positional relationship due to an eccentricity between the code pattern 110 of the rotating disk 100 and the fixed slit 122 of the detecting unit 120 in the first embodiment. Fig. 4 is an explanatory diagram showing a change in a positional relationship due to an eccentricity between the rotating disk 100 and the code pattern 110 in the first embodiment.

In Fig. 3, the code pattern 110 is constituted of the first code pattern 111 on an inner-circumferential side of the rotating disk 100 and the second code pattern 112 on an outer-circumferential side of the rotating disk 100 as shown in Fig. 1.

The fixed slit 122 is constituted of the first fixed slit 122a corresponding to the first code pattern 111 on the inner-circumferential side and the second fixed slit 122b corresponding to the second code pattern 112 on the outer-circumferential side.

In Fig. 3, it is assumed that the rotating disk 100 rotates counterclockwise. In addition, in order to simplify a description of an effect of an eccentricity, Fig. 3 shows positions of the first code pattern 111, the first fixed slit 122a, the second code pattern 112, and the second fixed slit 122b based on a timing that creates a state where the positions are aligned without an eccentricity.

Fig. 3(a) shows a positional relationship, at a specific timing, between a pair made up of the first code pattern 111 and the first fixed slit 122a and a pair made up of the second code pattern 112 and the second fixed slit 122b when there is no eccentricity between the rotating disk 100 and the code pattern 110. In the case of Fig. 3(a), the pair made up of the first code pattern 111 and the first fixed slit 122a and the pair made up of the second code pattern 112 and the second fixed slit 122b remain overlapped with each other in the same phase even if the rotating disk 100 rotates.

Figs. 3(b1) to 3(b8) show positional relationships between the pair made up of the first code pattern 111 and the first fixed slit 122a and the pair made up of the second code pattern 112 and the second fixed slit 122b in states of an eccentricity in directions of 0 degrees, 45 degrees, 90 degrees, 135 degrees, 180 degrees, 225 degrees, 270 degrees, and 315 degrees when a + direction of an X axis of an XY plane is defined as 0 degrees, a + direction of a Y axis of the XY plane is defined as 90 degrees, and an eccentricity is defined as a direction of deviation of the code pattern 110 relative to a center of rotation of the rotating disk 100. The phases in Figs. 3(b1) to 3(b8) indicate states at a same specific timing as Fig. 3(a). In Figs. 3(b1) to 3(b8), an outlined arrow indicates a direction of an eccentricity.

Figs. 4(b1) to 4(b8) schematically show states of an eccentricity in directions of 0 degrees, 45 degrees, 90 degrees, 135 degrees, 180 degrees, 225 degrees, 270 degrees, and 315 degrees when the + direction of the X axis of the XY plane is defined as 0 degrees, the + direction of the Y axis of the XY plane is defined as 90 degrees, and a position of the detecting unit 120 is assumed to be at 0 degrees.

Hereinafter, a situation where a pair made up of the first code pattern 111 and the first fixed slit 122a and a pair made up of the second code pattern 112 and the second fixed slit 122b overlap with each other at different timings due to an eccentricity will be described. In this case, due to the counterclockwise rotation of the rotating disk 100, the first code pattern 111 positioned above the first fixed slit 122a means a phase advance, the first code pattern 111 positioned below the first fixed slit 122a means a phase lag, and the first code pattern 111 overlapping with the first fixed slit 122a means a phase coincidence. In a similar manner, due to the counterclockwise rotation of the rotating disk 100, the second code pattern 112 positioned above the second fixed slit 122b means a phase advance, the second code pattern 112 positioned below the second fixed slit 122b means a phase lag, and the second code pattern 112 overlapping with the second fixed slit 122b means a phase coincidence.

In Fig. 3(b1), due to an eccentricity in the 0-degree direction (refer to Fig. 4(b1)), the first code pattern 111 enters a state of a phase lag relative to the first fixed slit 122a and the second code pattern 112 enters a state of a phase advance relative to the second fixed slit 122b.

In Fig. 3(b2), due to an eccentricity in the 45-degree direction (refer to Fig. 4(b2)), the first code pattern 111 coincides with the first fixed slit 122a and the second code pattern 112 enters a state of a further phase advance relative to the second fixed slit 122b.

In Fig. 3(b3), due to an eccentricity in the 90-degree direction (refer to Fig. 4(b3)), both the first code pattern 111 and the second code pattern 112 enter a state of a phase advance relative to the first fixed slit 122a and the second fixed slit 122b.

In Fig. 3(b4), due to an eccentricity in the 135-degree direction (refer to Fig. 4(b4)), the first code pattern 111 enters a state of a further phase advance relative to the first fixed slit 122a and the second code pattern 112 enters a state of coincidence with the second fixed slit 122b.

In Fig. 3(b5), due to an eccentricity in the 180-degree direction (refer to Fig. 4(b5)), the first code pattern 111 enters a state of a phase advance relative to the first fixed slit 122a and the second code pattern 112 enters a state of a phase lag relative to the second fixed slit 122b.

In Fig. 3(b6), due to an eccentricity in the 225-degree direction (refer to Fig. 4(b6)), the first code pattern 111 coincides with the first fixed slit 122a and the second code pattern 112 enters a state of a further phase lag relative to the second fixed slit 122b.

In Fig. 3(b7), due to an eccentricity in the 270-degree direction (refer to Fig. 4(b7)), both the first code pattern 111 and the second code pattern 112 enter a state of a phase lag relative to the first fixed slit 122a and the second fixed slit 122b.

In Fig. 3(b8), due to an eccentricity in the 315-degree direction (refer to Fig. 4(b8)), the first code pattern 111 enters a state of a further phase lag relative to the first fixed slit 122a and the second code pattern 112 enters a state of coincidence with the second fixed slit 122b.

In other words, as shown in Figs. 3(b1) to 3(b8), phase characteristics of a code pattern when an eccentricity exists as described below are created between the code pattern 110 with an inclination and a direction of the eccentricity.

The phase of the first code pattern 111 with an inclination of +45 degrees coincides with the phase of the first fixed slit 122a in eccentricities of 45 degrees and 225 degrees that are parallel to the inclination and no deviation occurs (no eccentricity detection sensitivity). The phase of the first code pattern 111 with an inclination of +45 degrees enters a state of maximum deviation from the phase of the first fixed slit 122a in eccentricities of 135 degrees and 315 degrees that are orthogonal to the inclination and the eccentricity can be detected with maximum sensitivity.

The phase of the second code pattern 112 with an inclination of -45 degrees coincides with the phase of the second fixed slit 122b in eccentricities of 135 degrees and 315 degrees that are parallel to the inclination and no deviation occurs (no eccentricity detection sensitivity). The phase of the second code pattern 112 with an inclination of -45 degrees enters a state of maximum deviation from the phase of the second fixed slit 122b in eccentricities of 45 degrees and 225 degrees that are orthogonal to the inclination and the eccentricity can be detected with maximum sensitivity.

Therefore, an eccentricity component in each direction of 360 degrees can be detected by combining the first code pattern 111 with an inclination of +45 degrees and the second code pattern 112 with an inclination of -45 degrees.

Phase characteristics such as those shown in Fig. 5 can be obtained by consecutively calculating, at even finer angles, the phase characteristics of the code pattern when an eccentricity exists shown in Figs. 3(b1) to 3(b8). Fig. 5 is an explanatory diagram showing phase characteristics of the code pattern when an eccentricity exists in the first embodiment. Phase characteristics due to the first code pattern 111 and phase characteristics due to the second code pattern 112 are obtained in a state where there is a phase difference of 90 degrees as described in Figs. 3(b1) to 3(b8).

### [Processing of encoder processing unit]

Next, processing of the encoder processing unit 130 to eliminate an eccentric angle error contained in a detected angle when optically detecting the code pattern 110 of the rotating disk 100 and calculating an angle of rotation will be described.

In the encoder processing unit 130, the angle data converting unit 131 calculates first angle data P1 by receiving, with the first light-receiving unit 123a, light transmitted through the first code pattern 111 and the first fixed slit 122a and calculates second angle data P2 by receiving, with the second light-receiving unit 123b, light transmitted through the second code pattern 112 and the second fixed slit 122b.

The eccentricity calculating unit 132 calculates a phase difference between the first angle data P1 and the second angle data P2 calculated by the angle data converting unit 131 and calculates an angle and an amplitude of an eccentricity by comparing the calculated phase difference with phase characteristics obtained in advance and shown in Fig. 5.

The eccentricity calculating unit 132 calculates an eccentric angle error at each angle in one rotation from the angle and the amplitude of an eccentricity and supplies the calculated eccentric angle error to the correcting unit 133.

The correcting unit 133 outputs data of an angle of rotation not affected by an eccentric angle error using the first angle data P1 and the second angle data P2 from the angle data converting unit 131 and the eccentric angle error from the eccentricity calculating unit 132.

Since the rotary encoder 1 according to the first embodiment uses the concentric first code pattern 111 and the concentric second code pattern 112 as the code pattern 110 and optically detects the first code pattern 111 and the second code pattern 112 by the single detecting unit 120, an apparatus can be downsized and readily installed without requiring troublesome adjusting work as compared to the encoder using two detecting units described in PTL 1.

### [Arrangement example (1) of code pattern and fixed slit]

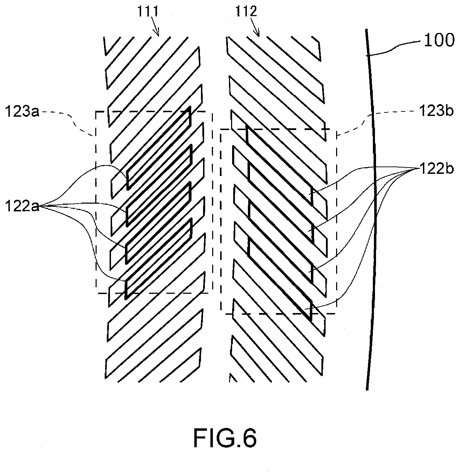

Hereinafter, a specific example of an arrangement of a pair made up of the first code pattern 111 and the second code pattern 112 and a pair made up of the first fixed slit 122a and the second fixed slit 122b will be described with reference to Fig. 6. Fig. 6 is an explanatory diagram showing a first arrangement example of the code pattern 110 of the rotating disk 100 and the fixed slit 122 of the detecting unit 120 in the first embodiment.

Fig. 6 shows a specific example in which the first fixed slit 122a and the second fixed slit 122b are each constituted of four slits.

The first fixed slit 122a is provided so as to have an angle and intervals corresponding to the first patterns constituting the first code pattern 111. In addition, the first light-receiving unit 123a is provided in accordance with the first fixed slit 122a. Light from the light source 121 is transmitted through the first code pattern 111 and the first fixed slit 122a and received by the first light-receiving unit 123a.

The second fixed slit 122b is provided so as to have an angle and intervals corresponding to the second patterns constituting the second code pattern 112. In addition, the second light-receiving unit 123b is provided in accordance with the second fixed slit 122b. Light from the light source 121 having been transmitted through the second code pattern 112 and the second fixed slit 122b is received by the second light-receiving unit 123b.

The first light-receiving unit 123a and the second light-receiving unit 123b are each constituted of a set of four light-receiving elements. The four light-receiving elements are assigned a+, a-, b+, and b-. By adding or subtracting signals from each of the light-receiving elements of a+, a-, b+, and b-, light reception signals for angle data calculation of two mutually-different phases can be obtained.

Note that a difference in positions in a circumferential direction between the first code pattern 111 and the second code pattern 112, a difference in positions in the circumferential direction between the first code pattern 111 and the first fixed slit 122a, and a difference in positions in the circumferential direction between the second code pattern 112 and the second fixed slit 122b can be optionally determined in accordance with processing by the encoder processing unit 130.

### [Arrangement example (2) of code pattern and fixed slit]

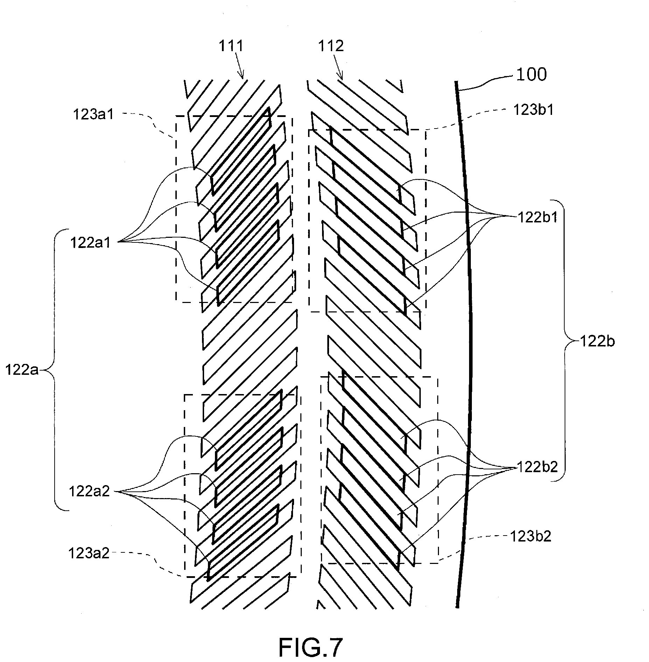

Hereinafter, a second specific example of an arrangement of the pair made up of the first code pattern 111 and the second code pattern 112 and the pair made up of the first fixed slit 122a and the second fixed slit 122b will be described with reference to Fig. 7. Fig. 7 is an explanatory diagram showing a second arrangement example of the code pattern 110 of the rotating disk 100 and the fixed slit 122 of the detecting unit 120 in the first embodiment.

In Fig. 7, the first fixed slit 122a is constituted of an eleventh fixed slit 122a1 constituted of four slits and a twelfth fixed slit 122a2 constituted of four slits.

The eleventh fixed slit 122a1 and the twelfth fixed slit 122a2 are constructed at a same position in the radial direction but at different positions in the circumferential direction. The eleventh fixed slit 122a1 and the twelfth fixed slit 122a2 are provided so as to have an angle and intervals corresponding to the first patterns constituting the first code pattern 111.

In addition, an eleventh light-receiving unit 123a1 is provided in accordance with the eleventh fixed slit 122a1 and a twelfth light-receiving unit 123a2 is provided in accordance with the twelfth fixed slit 122a2.

Light from the light source 121 is transmitted through the first code pattern 111 and the eleventh fixed slit 122a1 and received by the eleventh light-receiving unit 123a1 and transmitted through the first code pattern 111 and the twelfth fixed slit 122a2 and received by the twelfth light-receiving unit 123a2.

In Fig. 7, the second fixed slit 122b is constituted of a twenty-first fixed slit 122b1 constituted of four slits and a twenty-second fixed slit 122b2 constituted of four slits.

The twenty-first fixed slit 122b1 and the twenty-second fixed slit 122b2 are constructed at a same position in the radial direction but at different positions in the circumferential direction. The twenty-first fixed slit 122b1 and the twenty-second fixed slit 122b2 are provided so as to have an angle and intervals corresponding to the second patterns constituting the second code pattern 112.

In addition, a twenty-first light-receiving unit 123b1 is provided in accordance with the twenty-first fixed slit 122b1 and a twenty-second light-receiving unit 123b2 is provided in accordance with the twenty-second fixed slit 122b2.

Light from the light source 121 is transmitted through the second code pattern 112 and the twenty-first fixed slit 122b1 and received by the twenty-first light-receiving unit 123b1 and transmitted through the second code pattern 112 and the twenty-second fixed slit 122b2 and received by the twenty-second light-receiving unit 123b2.

The eleventh light-receiving unit 123a1, the twelfth light-receiving unit 123a2, the twenty-first light-receiving unit 123b1, and the twenty-second light-receiving unit 123b2 are each constituted of a set of four light-receiving elements. The four light-receiving elements are assigned a+, a-, b+, and b-. By adding or subtracting signals from each of the light-receiving elements of a+, a-, b+, and b-, light reception signals for angle data calculation of two mutually-different phases can be obtained.

Note that a difference in positions in the circumferential direction between the first code pattern 111 and the eleventh fixed slit 122a1, a difference in positions in the circumferential direction between the first code pattern 111 and the twelfth fixed slit 122a2, a difference in positions in the circumferential direction between the second code pattern 112 and the twenty-first fixed slit 122b1, and a difference in positions in the circumferential direction between the second code pattern 112 and the twenty-second fixed slit 122b2 can be optionally determined in accordance with processing by the encoder processing unit 130.

### [Another example of code pattern]

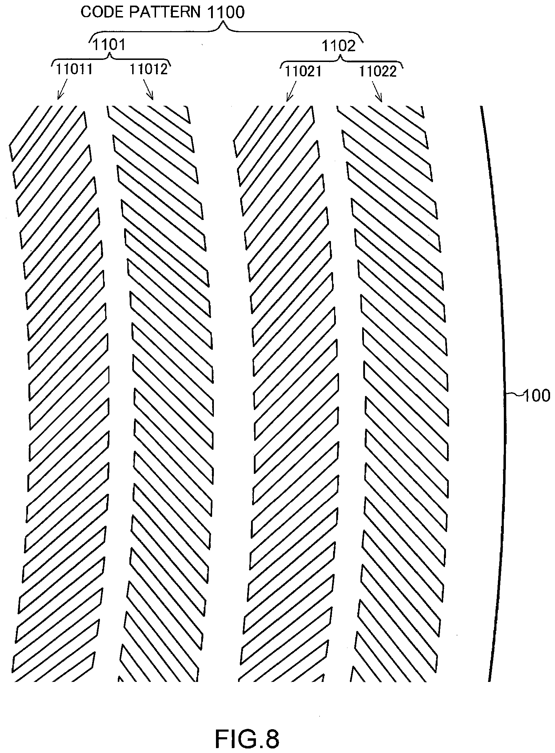

Hereinafter, a quadruple code pattern 1100 will be described as another example of the code pattern 110 with reference to Fig. 8. Fig. 8 is an explanatory diagram showing another code pattern 1100 in the first embodiment.

The code pattern 1100 is constructed on the rotating disk 100 by further duplicating the double code pattern 110. In other words, the code pattern 1100 is constituted of an inner-circumferential side code pattern 1101 and an outer-circumferential side code pattern 1102. The inner-circumferential side code pattern 1101 is provided with an inner-circumferential side first code pattern 11011 and an inner-circumferential side second code pattern 11012. The outer-circumferential side code pattern 1102 is provided with an outer-circumferential side first code pattern 11021 and an outer-circumferential side second code pattern 11022.

In this case, a fixed slit and a light-receiving unit such as those shown in Fig. 6 or 7 may be respectively provided in accordance with the quadruple code pattern 1100.

The encoder processing unit 130 may correct an eccentric angle error based on an eccentricity obtained by averaging an eccentricity calculated based on the inner-circumferential side code pattern 1101 and an eccentricity calculated based on the outer-circumferential side code pattern 1102. Alternatively, the encoder processing unit 130 may correct an eccentric angle error by averaging an eccentric angle error calculated based on an eccentricity obtained based on the inner-circumferential side code pattern 1101 and an eccentric angle error calculated based on an eccentricity obtained based on the outer-circumferential side code pattern 1102.

### [Effect of embodiment]

(1) The rotary encoder 1 according to the first invention is a rotary encoder 1 which detects a rotation of a rotating disk 100 provided with an annular code pattern 110 using a detecting unit 120 and which calculates an angle of rotation of the rotating disk 100 using an encoder processing unit 130, wherein the code pattern 110 is constituted of a concentric first code pattern 111 and a concentric second code pattern 112, the first code pattern 111 is constituted of a plurality of first patterns with a first inclination with respect to a radial direction, the second code pattern 112 is constituted of a plurality of second patterns with a second inclination in a direction that differs from the first inclination with respect to the radial direction, and the encoder processing unit 130 calculates an eccentricity of the code pattern 110 based on a detection result of the first code pattern 111 by the detecting unit 120 and a detection result of the second code pattern 112 by the detecting unit 120 and corrects the angle of rotation according to the calculated eccentricity.
   Accordingly, an eccentric angle error can be eliminated when optically detecting the code pattern 110 of the rotating disk 100 to calculate an angle of rotation without increasing apparatus size.
(2) In the rotary encoder 1 of (1) described above according to the first embodiment, the first inclination and the second inclination are either +45 degrees and -45 degrees or - 45 degrees and +45 degrees. When the first code pattern 111 has an inclination of +45 degrees, maximum sensitivity is provided with respect to eccentricities in a 135-degree direction and a 315-degree direction that are orthogonal to +45 degrees but no sensitivity is provided with respect to eccentricities in a 45-degree direction and a 225-degree direction that are parallel to +45 degrees. When the second code pattern 112 has an inclination of -45 degrees, maximum sensitivity is provided with respect to eccentricities in a 45-degree direction and a 225-degree direction that are orthogonal to -45 degrees but no sensitivity is provided with respect to eccentricities in a 135-degree direction and a 315-degree direction that are parallel to -45 degrees. Therefore, an eccentricity component in each direction of 360 degrees can be detected by combining the first code pattern 111 with an inclination of +45 degrees and the second code pattern 112 with an inclination of -45 degrees.
(3) In the rotary encoder 1 of (1) or (2) described above according to the first embodiment, the plurality of first patterns constituting the first code pattern 111 and the plurality of second patterns constituting the second code pattern 112 are constituted of slits. The detecting unit 120 includes: a light source 121 which irradiates the first code pattern 111 and the second code pattern 112 with light; a fixed slit 122 which condenses, by an opening with a certain size, each of light from the light source 121 transmitted through the first code pattern 111 and light from the light source 121 transmitted through the second code pattern 112; and a light-receiving unit 123 which detects light from the light source 121 transmitted through the first code pattern 111 and the fixed slit 122 and which detects light from the light source 121 transmitted through the second code pattern 112 and the fixed slit 122. Accordingly, an eccentricity can be optically detected based on a positional relationship between the pair made up of the first code pattern 111 and the second code pattern 112 with different inclinations and the fixed slit 122 and an eccentric angle error can be eliminated when optically detecting the code pattern 110 of the rotating disk 100 to calculate an angle of rotation without increasing apparatus size.
(4) In the rotary encoder 1 of any one of (1) to (3) described above according to the first embodiment, the encoder processing unit 130 includes: an angle data converting unit 131 which generates angle data based on a detection result of the first code pattern 111 by the detecting unit 120 and a detection result of the second code pattern 112 by the detecting unit 120; an eccentricity calculating unit 132 which calculates eccentricity data indicating an eccentricity of the code pattern 110 based on a change in phases between the detection result of the first code pattern 111 by the detecting unit 120 and the detection result of the second code pattern 112 by the detecting unit 120; and a correcting unit 133 which corrects the angle data based on the eccentricity data. Accordingly, an eccentric angle error can be eliminated when optically detecting the code pattern 110 of the rotating disk 100 to calculate an angle of rotation based on a detection result of the first code pattern 111 and a detection result of the second code pattern 112.

### Reference Signs List

- 1: Rotary encoder
- 10: Rotating body
- 100: Rotating disk
- 101: Rotary shaft
- 110: Code pattern
- 111: First code pattern
- 112: Second code pattern
- 120: Detecting unit
- 121: Light source
- 122: Fixed slit
- 122a: First fixed slit
- 122a1: Eleventh fixed slit
- 122a2: Twelfth fixed slit
- 122b: Second fixed slit
- 122b1: Twenty-first fixed slit
- 122b2: Twenty-second fixed slit
- 123: Light-receiving unit
- 123a: First light-receiving unit
- 123a1: Eleventh light-receiving unit
- 123a2: Twelfth light-receiving unit
- 123b: Second light-receiving unit
- 123b1: Twenty-first light-receiving unit
- 123b2: Twenty-second light-receiving unit
- 130: Encoder processing unit
- 131: Angle data converting unit
- 132: Eccentricity calculating unit
- 133: Correcting unit
- 1100: Code pattern
- 1101: Inner-circumferential side code pattern
- 1102: Outer-circumferential side code pattern
- 11011: Inner-circumferential side first code pattern
- 11012: Inner-circumferential side second code pattern
- 11021: Outer-circumferential side first code pattern
- 11022: Outer-circumferential side second code pattern
- θ: Angle of rotation

## Claims

1. A rotary encoder that is a rotary encoder (1) which detects a rotation of a rotating disk (100) provided with an annular code pattern (110) by using a detecting unit (120) and which calculates an angle of rotation of the rotating disk (100) by using an encoder processing unit (130), wherein
the code pattern (110) is constituted of a concentric first code pattern (111) and a concentric second code pattern (112),
the first code pattern (111) is constituted of a plurality of first patterns having a first inclination with respect to a radial direction,
the second code pattern (112) is constituted of a plurality of second patterns having a second inclination in a direction that differs from the first inclination with respect to the radial direction, and
the encoder processing unit (130) calculates an eccentricity of the code pattern (110), based on a detection result of the first code pattern (111) by the detecting unit (120) and a detection result of the second code pattern (112) by the detecting unit (120) and corrects the angle of rotation according to the calculated eccentricity.

2. The rotary encoder according to claim 1, wherein the first inclination and the second inclination are either +45 degrees and -45 degrees or -45 degrees and +45 degrees.

3. The rotary encoder according to claim 1, wherein
the plurality of first patterns constituting the first code pattern (111) and the plurality of second patterns constituting the second code pattern (112) are constituted of slits, and
the detecting unit (120) includes:
a light source (121) which irradiates the first code pattern (111) and the second code pattern (112) with light;
a fixed slit (122) which condenses, by an opening having a certain size, each of light from the light source transmitted through the first code pattern (111) and light from the light source transmitted through the second code pattern (112); and
a light-receiving unit (123) which detects light from the light source transmitted through the first code pattern (111) and the fixed slit (122) and which detects light from the light source transmitted through the second code pattern (112) and the fixed slit (122).

4. The rotary encoder according to any one of claims 1 to 3, wherein
the encoder processing unit (130) includes:
an angle data converting unit (131) which generates angle data, based on a detection result of the first code pattern (111) by the detecting unit (120) and a detection result of the second code pattern (112) by the detecting unit (120);
an eccentricity calculating unit (132) which calculates eccentricity data indicating an eccentricity of the code pattern (110), based on a change in phases between the detection result of the first code pattern (111) by the detecting unit (120) and the detection result of the second code pattern (112) by the detecting unit (120); and
a correcting unit (133) which corrects the angle data, based on the eccentricity data.
